# EUROPÄISCHE PATENTSCHRIFT

(11) **EP 3 794 918 B1**
(45) Veröffentlichungstag und Bekanntmachung des Hinweises auf die Patenterteilung: **08.03.2023**
(21) Anmeldenummer: 20180827.6
(22) Anmeldetag: 18.06.2020
(51) Int. Cl.: A01B 69/00, A01B 76/00, A01B 79/00

(54) **FAHRZEUG, DATENVERARBEITUNGSSYSTEM UND BETRIEBSVERFAHREN DAFÜR**
VEHICLE, DATA PROCESSING SYSTEM AND METHOD OF OPERATING SAME
VÉHICULE, SYSTÈME DE TRAITEMENT DE DONNÉES ET PROCÉDÉ DE FONCTIONNEMENT ASSOCIÉ

(30) Priorität: 17.09.2019 DE 102019006523
(43) Veröffentlichungstag der Anmeldung: 24.03.2021
(73) Patentinhaber: CLAAS E-Systems GmbH, 49201 Dissen (DE)
(72) Erfinder: Reinecke, Max, 33775 Versmold (DE); Deeken, Henning, 49084 Osnabrück (DE); Höke, Oliver, 49090 Osnabrück (DE); Losch, Michael, 33775 Versmold (DE)
(74) Vertreter: CLAAS Gruppe

(56) Entgegenhaltungen:
- EP-A2- 0 580 166
- DE-A1-102008 020 494
- DE-A1-102016 215 197
- JP-A- 2012 120 481
- JP-B1- 6 564 483

## Beschreibung

Die vorliegende Erfindung betrifft ein Fahrzeug, insbesondere ein landwirtschaftliches Fahrzeug, und ein Datenverarbeitungssystem zum Planen und/oder Verwalten von Einsätzen des einen Fahrzeugs sowie eventuell weiterer Fahrzeuge, das an Bord des einen Fahrzeugs implementiert oder über mehrere Orte verteilt sein kann. Sie betrifft ferner ein Betriebsverfahren für das Fahrzeug.

Aus der EP0580166A und der JP2012120481A sind Navigationssysteme mit Sprachsteuerung bekannt.

Viele für die Planung von Arbeitsabläufen in der Landwirtschaft relevante Geländemerkmale sind jedoch weder punktuell noch scharf begrenzt. Das macht es schwierig, zu diesen Geländemerkmalen belastbare Daten zu sammeln, mit denen sich die Planung der Arbeitsabläufe verbessern lässt.

Ziel der Erfindung ist, eine Technik zu schaffen, mit denen auch solche Daten gesammelt werden können, ohne dass dafür die Aufmerksamkeit eines Fahrers ständig in Anspruch genommen wird.

Die Erfindung erreicht dieses Ziel, indem der Fahrer, anstatt dazu angehalten werden, gleichsam vorbeugend auf Geländemerkmale zu achten, die möglicherweise für den Ablauf seiner Arbeit relevant sein könnten, sich darauf konzentrieren kann, eine zuvor festgelegte Trajektorie zu fahren, und nur dann, wenn es zu Abweichungen zwischen der festgelegten und der tatsächlich gefahrenen Trajektorie kommt, angenommen wird, dass für diese Abweichung ein Geländemerkmal ursächlich sein wird, das sich an dem Ort befindet, an dem die Abweichung entstanden ist. Abweichungen können darin bestehen, das das Fahrzeug sich zu einem gegebenen Zeitpunkt nicht an dem Ort befindet, an dem es sich gemäß Trajektorie befinden sollte, oder dass es zu dem gegebenen Zeitpunkt nicht die für diesen Zeitpunkt vorgesehene Arbeit verrichtet oder sie in anderer Weise verrichtet als gemäß Trajektorie geplant. Alternativ kann die Abweichung auch darin bestehen, dass das Fahrzeug an dem Ort, an dem es sich gerade befindet, nicht die für diesen Ort vorgesehene Arbeit verrichtet oder sie anders als geplant verrichtet. Vom Fahrer kann dann eine Sprachmeldung angefordert werden, die das Geländemerkmal für die Abweichung ursächliche Geländemerkmal beschreibt, doch kommt es für die Genauigkeit, mit der die Position des Geländemerkmals bestimmt wird, nicht mehr auf die Schnelligkeit an, mit der der Fahrer die Anforderung beantwortet.

Gemäß einem ersten Aspekt ist die Erfindung verkörpert in einem insbesondere landwirtschaftlichen Fahrzeug, mit
- ersten Mitteln zum Ermitteln eines Istwerts wenigstens eines Betriebsparameters des Fahrzeugs,
- zweiten Mitteln zum Aufzeichnen von Sprachmeldungen eines Fahrers,
- dritten Mitteln zum Ermitteln der aktuellen Zeit,
- vierten Mitteln zum Abgleichen des Istwerts des wenigstens einen Betriebsparameters mit einem für die von den dritten Mitteln bestimmte aktuelle Zeit vorgesehenen Sollwert und zum Auffordern des Fahrers zur Abgabe einer Sprachmeldung im Falle einer signifikanten Abweichung zwischen Ist- und Sollwert.

Die Ursache für eine Abweichung zwischen Soll- und Istwert kann ein Geländemerkmal sein; z.B. kann ein bei der Planung der Route nicht vorhergesehenes Hindernis den Fahrer zwingen, von der geplanten Route abzuweichen; in diesem Fall kommt als Betriebsparameter die Position des Fahrzeugs in Betracht.

Betriebsparameter kann auch die Fahrgeschwindigkeit sein; bleibt hier der Istwert hinter dem Sollwert zurück, so kann der Grund hierfür in schwierigen Geländeverhältnissen liegen, die, wenn sie mit der Sprachmeldung beschrieben werden, bei der Planung eines erneuten Einsatzes auf derselben Fläche besser berücksichtigt werden können.

Als Betriebsparameter kommt auch ein Betriebszustand eines von dem Fahrzeug mitgeführten Arbeitswerkzeugs in Betracht. Ein solcher Betriebszustand kann zweiwertig sein, z.B. "in Betrieb"/"außer Betrieb", so kann etwa ein Pflug als Arbeitswerkzeug abgesenkt oder angehoben sein, und wenn Soll- und Istwert voneinander abweichen, indem der Pflug angehoben ist, während er laut geplanter Trajektorie abgesenkt sein sollte, so wird diese Abweichung registriert und bewirkt, dass der Fahrer zur Abgabe einer Sprachmeldung aufgefordert wird.

Ein Betriebsparameter des Arbeitswerkzeugs kann auch mehrwertig sein oder ein Kontinuum von möglichen Werten annehmen, so z.B. eine Drehzahl eines Rotors oder ein Massenstrom in einem Erntevorsatz, einem Dreschwerk, einem Häckselwerk oder dergleichen.

Bei einem zweiwertigen (oder allgemeiner, diskretwertigen) Betriebsparameter kann jede Abweichung zwischen Ist- und Sollwert als signifikant angesehen werden. Bei einem kontinuierlichwertigen Betriebsparameter sollte ein Grenzwert vorgegeben sein, den eine Abweichung zwischen Soll- und Istwert überschreiten muss, um signifikant zu sein.

Der Betrag dieses Grenzwerts kann von einem Benutzer - typischerweise demjenigen Benutzer, der auch die Sollwerte vorgibt, d.h. eine Trajektorie des Fahrzeugs plant, festlegbar sein.

Gemäß einem zweiten Aspekt kann die Erfindung ferner verkörpert sein in einem insbesondere landwirtschaftlichen Fahrzeug, mit
- ersten Mitteln zum Ermitteln eines Istwerts wenigstens eines von der Position verschiedenen Betriebsparameters des Fahrzeugs,
- zweiten Mitteln zum Aufzeichnen von Sprachmeldungen eines Fahrers,
- dritten Mitteln zum Ermitteln der aktuellen Position,
- vierten Mitteln (7, 10) zum Abgleichen (S4) des Istwerts des wenigstens einen Betriebsparameters mit einem für die von den dritten Mitteln (3) bestimmte aktuelle Position vorgesehenen Sollwert und zum Auffordern (S5) des Fahrers zur Abgabe einer Sprachmeldung im Falle einer signifikanten Abweichung zwischen Ist- und Sollwert.

Während gemäß dem ersten Aspekt davon ausgegangen wird, dass der Sollwert als Funktion der Zeit vorgegeben ist - was insbesondere dann Sinn macht, wenn der Betriebsparameter eine Position des Fahrzeugs ist, können gemäß obigem zweitem Aspekt andere Betriebsparameter als Funktion der Position vorgegeben sein; so ist es z.B. einfacher, anhand kartographischer Daten einer Ackerfläche vorzugeben, wo ein Pflug abgesenkt bzw. angehoben sein soll, als zunächst eine Route über die Ackerfläche zu planen und dann jeweils Zeiten vorzugeben, an denen der Pflug abgesenkt bzw. angehoben sein soll.

Mit der Sprachmeldung, zu deren Abgabe der Fahrer aufgefordert wird, kann er ein Hindernis, das zu der beobachteten Abweichung geführt hat, erläutern, so dass es entweder beseitigt oder bei einer späteren Routenplanung berücksichtigt werden kann. Dafür ist es insbesondere zweckmäßig, wenn die zweiten Mittel eingerichtet sind, eine Sprachmeldung verknüpft mit wenigstens einem Istwert der Position und/oder der Zeit aufzuzeichnen. Des Weiteren kann eine Angabe zur Person des Fahrers gespeichert werden. Es können auch Messwerte von diversen Betriebsparametern des Fahrzeugs gespeichert werden, die, falls der Grund für die Abweichung eine technische Störung ist, für die Ermittlung der Störungsursache von Bedeutung sein könnten.

Eine Abweichung kann aber auch andere Ursachen haben, z.B. wenn der Fahrer bei Erreichen einer zu bearbeitenden landwirtschaftlichen Fläche erkennt, dass zu deren Bearbeitung noch Anpassungen an dem Fahrzeug erforderlich sind, wenn er eine nicht ursprünglich geplante Pause benötigt, oder wenn eine Störung am Fahrzeug auftritt. Auch in diesem Fall kommt es zu einer Abweichung zwischen Ist- und Sollposition des Fahrzeugs, die der Fahrer in der Sprachmeldung erläutern kann. In diesem Fall ist eine Funkschnittstelle zum Verbreiten des Inhalts der Sprachmeldung nützlich, um einer Leitstelle die Möglichkeit zu geben, die Routen anderer Fahrzeuge an die Abweichung anzupassen, oder bei Bedarf ein Ersatzfahrzeug oder technische Unterstützung zur Behebung der Störung zu schicken.

Eine solche Leitstelle kann zusammen mit dem einen Fahrzeug und eventuell weiteren Fahrzeugen Teil eines erfindungsgemäßen Datenverarbeitungssystems sein.

Um eine automatische Weiterverarbeitung der Sprachmeldung zu ermöglichen, sollten Mittel zu deren Transkription vorgesehen sein. Um die mit der Leitstelle auszutauschende Datenmenge gering zu halten, sollten die Transkriptionsmittel vorzugsweise an Bord des Fahrzeugs implementiert sein. Dort können auch Mittel zur Wiedergabe der transkribierten Meldung vorhanden sein, die es dem Fahrer erlauben zu beurteilen, ob seine Sprachmeldung korrekt transkribiert worden ist, und sie wenn nötig zu korrigieren.

Mittel zur semantischen Analyse einer aufgezeichneten Sprachmeldung erlauben es, eine Reaktion auf eine Sprachmeldung des Fahrers zu automatisieren, also beispielsweise zu erkennen, ob und ggf. in welchem Umfang Routen umgeplant werden müssen, oder ob der Fahrer Unterstützung benötigt, und diese ggf. anzufordern.

Zu diesem Zweck kann die semantische Analyse ein Untersuchen der Sprachmeldung auf das Vorkommen wenigstens eines Schlüsselbegriffs umfassen, der einen Rückschluss auf eventuell erforderliche Maßnahmen zulässt.

Wenn es zu einer Abweichung zwischen Soll- und Istwert der Position gekommen ist, z.B. weil der Fahrer das Fahrzeug anhalten musste, um eine Verstopfung zu beheben, dann ist es im Allgemeinen schwierig, diese Abweichung später durch schnelleres Fahren wieder zu beseitigen. Deswegen sollten Mittel zum Aktualisieren von Sollwerten basierend auf der aufgezeichneten Sprachmeldung vorgesehen sein. Diese können z.B. die Route des Fahrzeugs mit verminderter Geschwindigkeit neu planen, wenn ein unerwartet dichter Bestand an Erntegut Ursache der Verstopfung war, oder eine Weiterfahrt des Fahrzeugs nach einer zur Behebung der Verstopfung benötigten Zeit planen und gleichzeitig Routen anderer, zusammenarbeitender Fahrzeuge an die Verzögerung anpassen.

Einem dritten Aspekt zufolge ist die Erfindung verkörpert in einem Verfahren zum Betreiben eines Fahrzeugs mit den Schritten
- Festlegen eines Sollwerts eines Betriebsparameters des Fahrzeugs als Funktion der Zeit oder, wenn der Betriebsparameter nicht selber die Position des Fahrzeugs ist, der Position; dann
- Fahren des Fahrzeugs und, während des Fahrens, Ermitteln wenigstens eines Istwerts des Betriebsparameters;
- Abgleichen des Istwerts mit einem für die aktuelle Zeit oder Position vorgesehenen Sollwert und Auffordern des Fahrers zur Abgabe einer Sprachmeldung im Falle einer signifikanten Abweichung zwischen Ist- und Sollwert;
- Aufzeichnen einer Sprachmeldung eines Fahrers.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: ein Blockdiagramm eines Datenverarbeitungssystems;
- Fig. 2: ein Fahrzeug in einem Feldeinsatz, im Zusammenwirken mit weiteren Fahrzeugen; und
- Fig. 3: ein Flussdiagramm eines Arbeitsverfahrens des Datenverarbeitungssystems.

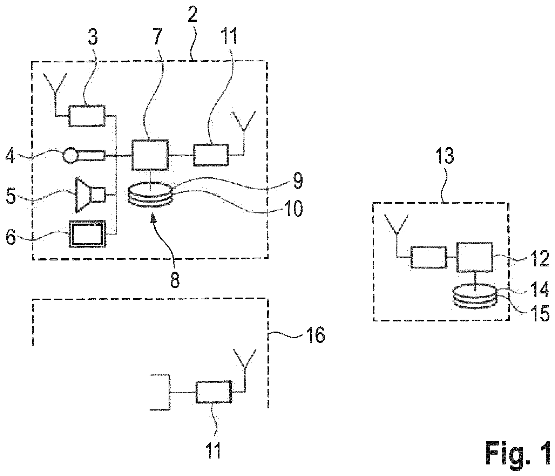

Fig. 1 zeigt in einem Blockdiagramm Komponenten eines erfindungsgemäßen Datenverarbeitungssystems 1. Wenigstens ein Teil dieser Komponenten befindet sich an Bord eines landwirtschaftlichen Fahrzeugs 2 wie etwa eines Mähdreschers, Feldhäckslers, Traktors oder dergleichen; andere Komponenten des Datenverarbeitungssystems 1 können auch außerhalb des Fahrzeugs 2 vorgesehen sein. Zu den notwendigerweise im Fahrzeug 2 angeordneten Komponenten gehören Mittel zum Ermitteln der Position des Fahrzeugs 2, typischerweise ein Satellitennavigationssystem 3, ein Mikrofon 4 zum Aufzeichnen von Sprachmeldungen eines Fahrers des Fahrzeugs 2 sowie ein Lautsprecher 5 und/oder ein Display 6 zum Liefern von Informationen an den Fahrer. Das Satellitennavigationssystem 3 kann auch als Quelle für ein die aktuelle Uhrzeit angebendes Signal dienen.

Ein Bordcomputer 7 des Fahrzeugs 2 sowie ein in dessen Speicher 8 hinterlegtes Spracherkennungsprogramm 9 bilden Mittel zur Transkription einer durch das Mikrofon 4 aufgezeichneten Sprachmeldung.

Der Bordcomputer 7 ist mit dem Display 6 verbunden, um, wenn eine Sprachmeldung transkribiert worden ist, den dabei erhaltenen Text anzuzeigen und so dem Fahrer zu ermöglichen, zu überprüfen, ob seine Sprachmeldung richtig transkribiert worden ist, und sie im Fehlerfall zu verwerfen und neu zu sprechen oder in anderer Weise zu korrigieren. Alternativ oder ergänzend kann ein Spracherzeugungsprogramm im Speicher 8 hinterlegt sein, dass eine Rückumwandlung des Transkripts in ein Audiosignal und dessen Ausgabe über den Lautsprecher 5 ermöglicht.

Im Speicher 8 ist ferner eine von dem Fahrzeug 2 zu fahrende Route in Form einer Reihe von Datensätzen hinterlegt, die jeweils einen Ort und einen Zeitpunkt, an dem sich das Fahrzeug 2 an dem betreffenden Ort befinden soll, spezifizieren. Ein ebenfalls auf dem Bordcomputer 7 laufendes Programm 10 ermittelt laufend eine Abweichung zwischen dem aktuell vom Satellitennavigationssystem 3 ermittelten Ort des Fahrzeugs 2 und dem Ort, an dem es sich der Route zufolge zum gegenwärtigen Zeitpunkt befinden sollte.

Solange diese Abweichung einen Grenzwert nicht überschreitet, bewirkt sie, dass der Bordcomputer 7 in die Lenkung des Fahrzeugs 2 eingreift, um durch eine Korrektur der Fahrtgeschwindigkeit und/oder - richtung die Abweichung zu vermindern. Wenn dies aufgrund eines der Korrektur zuwiderlaufenden Eingriffs des Fahrers nicht möglich ist, kommt es zu einer Überschreitung des Grenzwerts; in diesem Fall fordert das Programm 10 den Fahrer dazu auf, die Gründe dafür in einer Sprachmeldung zu nennen, die daraufhin von dem Spracherkennungsprogramm 9 verarbeitet wird.

Eine Funkschnittstelle 11 ist vorgesehen, um das von dem Spracherkennungsprogramm 9 generierte Transkript der Sprachmitteilung an einen Computer 12 einer Leitstelle 13 zu übermitteln, an der der Einsatz des Fahrzeugs 2 mit denen anderer Fahrzeuge koordiniert wird. Gestützt auf eine Semantikanalyse entscheidet der Computer 12 über erforderliche Maßnahmen. Ein dafür benötigtes Semantikanalyseprogramm 14 ist im hier gezeigten Fall an der Leitwarte gespeichert, um auf dem Computer 12 ausgeführt zu werden; alternativ kann die Semantikanalyse wie die Transkription bereits auf dem Bordrechner 7 stattfinden.

Die erforderlichen Maßnahmen umfassen zumindest die Erzeugung einer neuen Route für das Fahrzeug 2 mit Hilfe eines Routenplanerprogramms 15 und deren Übertragung an den Bordcomputer 7, eventuell auch die Anpassung der Routen anderer Fahrzeuge 16.

Zusammen mit dem Transkript überträgt der Bordcomputer 7 folgende Daten oder eine Auswahl von diesen an den Computer 12: den Zeitpunkt, an dem die Grenzwertüberschreitung festgestellt wurde, die Identität des Fahrers sowie Betriebsparameter des Fahrzeugs 2, die in dem Fall, dass die Grenzwertüberschreitung auf eine Störung zurückzuführen ist, einen Rückschluss auf die Ursache zulassen könnten.

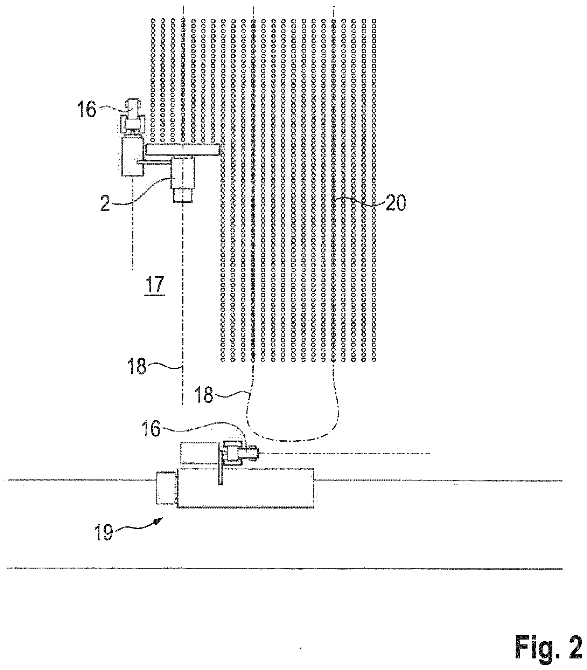

Zur Konkretisierung der obigen abstrakten Erläuterungen soll im Folgenden ein Anwendungsfall betrachtet werden. In Fig. 2 ist das Fahrzeug 2 ein Mähdrescher, der eingesetzt wird, um eine Feldfläche 17 abzuernten und dazu auf der Feldfläche 17 eine durch eine strichpunktierte Linie symbolisierte Route 18 abfahren soll. Die Route 18 spezifiziert nicht nur Punkte der Feldfläche 17, über die der Mähdrescher fahren soll, sondern auch jeweils die Zeiten, zu denen dies geschehen soll. Auf der Feldfläche ist als weiteres Fahrzeug 16 ein Transportfahrzeug im Einsatz. Seine Route ist von dem Routenplanerprogramm 15 so geplant, dass es sich von Zeit zu Zeit, immer wenn ein Korntank des Mähdreschers voll oder nahezu voll ist, mit dem Mähdrescher trifft, um von diesem geerntetes Korn zu übernehmen, um den Korntank des Mähdreschers zu leeren, und, wenn seine eigene Ladekapazität ausgeschöpft ist, das aufgenommene Korn an einer Sammelstelle ablädt. Die Sammelstelle kann ein weiteres Fahrzeug 19 sein, z.B. ein am Rand der Feldfläche 17 parkender Transporter.

Die Geschwindigkeit, mit der der Mähdrescher die Route 18 abfährt, ist vorab basierend auf einer geschätzten Dichte eines Pflanzenbestands 20 auf der Feldfläche 17 festgelegt worden. Wenn die reale Dichte des Pflanzenbestands 20 auf der Feldfläche 17 höher ist als geschätzt, dann kann zur Vermeidung eines Schneidwerkstopfers notwendig sein, die Geschwindigkeit des Mähdreschers unter den bei der Planung der Route 18 festgelegten Wert zu senken. Wenn der Fahrer dies tut, hat dies zur Folge, dass eine Abweichung zwischen Soll- und Istposition des Mähdreschers im Laufe der Zeit zunimmt und alsbald einen Grenzwert überschreitet, und der Fahrer daraufhin zur Abgabe einer Sprachmeldung aufgefordert wird.

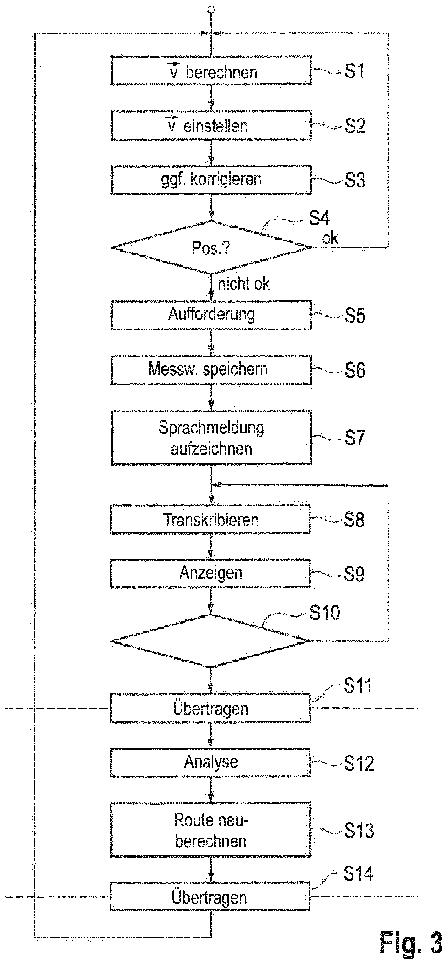

Wenn die Fahrzeuge 2, 16, 19 mit dem Abernten der Feldfläche 17 beginnen, verfügt jedes von ihnen über eine im Speicher des Bordcomputers 7 hinterlegte, zuvor vom Computer 12 berechnete Route. Basierend auf seiner Route ermittelt der Bordcomputer 7 eine Soll-Fahrtrichtung und -Geschwindigkeit für den Mähdrescher (Schritt S1 von Fig. 3). Diese Soll-Fahrtrichtung und -Geschwindigkeit können im autonomen Betrieb vom Bordcomputer 7 direkt eingestellt werden (S2); alternativ können sie auf dem Display 6 angezeigt werden, um den Fahrer zu veranlassen, sie einzustellen (S2), so dass sich der Mähdrescher mit der geplanten Geschwindigkeit und in der geplanten Richtung in den Bestand 20 hinein bewegt.

Wenn sich dabei z. B die Dichte des Bestands 20 als höher erweist als vom Computer 12 bei der Planung der Route angenommen, dann kann der Fahrer, wenn er dies erkennt, die Fahrgeschwindigkeit korrigierend senken (S3) und auf diese Weise einem Stopfer vorbeugen. Im Schritt S4 wird die Istposition des Fahrzeugs 2 mit der durch die Route vorgegebenen Sollposition verglichen. Wenn die Fahrt mit verminderter Geschwindigkeit längere Zeit, über mehrere Iterationen der Schritte S1-S4 hinweg, andauert, überschreitet nach einer gewissen Zeit die Abweichung zwischen Ist- und Sollposition einen Grenzwert. Wenn dies in Schritt S4 festgestellt wird, ergeht in Schritt S5 eine Aufforderung an den Fahrer, den Grund für die Abweichung zu nennen; gleichzeitig werden der aktuelle Ort des Fahrzeugs 2 sowie ggf. diverse aktuelle Messwerte von Betriebsparametern des Fahrzeugs 2 zwischengespeichert (S6).

Die auf die Aufforderung hin vom Fahrer abgegebene Sprachmeldung wird vom Mikrofon 4 aufgezeichnet (S7) und vom Spracherkennungsprogramm 9 transkribiert (S8) .

Das Transkript wird auf dem Display 6 angezeigt (S9); wenn der Fahrer daraufhin die Sprachmeldung wiederholt (S10), kann daraus geschlossen werden, dass das Transkript fehlerhaft ist und durch ein neues Transkript der wiederholten Sprachmeldung ersetzt werden soll, das Verfahren kehrt daher in diesem Fall zu Schritt S8 zurück.

Andernfalls wird angenommen, dass das Transkript korrekt ist, und es wird in einem Datensatz zusammen mit den in Schritt S6 zwischengespeicherten Daten und einer Kennung des Fahrers an den Computer 12 übertragen (S11). Dort findet eine semantische Analyse der Sprachmeldung statt (S12). Diese kann darin bestehen, dass das Transkript auf das Vorkommen bestimmter vorgegebener Schlüsselwörter darin untersucht wird.

Da der in Schritt S6 zwischengespeicherte Ort derjenige ist, an dem die signifikante Abweichung festgestellt wurde und nicht der, an dem die Sprachmeldung abgegeben wurde, hängt die Genauigkeit der Ortsbestimmung nicht davon ab, wie schnell nach einem zu kommentierenden Ereignis der Fahrer die darauf bezogene Sprachmeldung abgibt.

Wird bei der semantischen Analyse S12 z.B. ein Hinweis auf "dichten Bestand" oder ein bedeutungsgleicher Begriff gefunden, dann berechnet der Computer 12 anhand der gelieferten Betriebsparameterwerte den Massenstrom des Korns im Mähdrescher 2, legt anhand dieses Massenstroms eine neue, angemessene Geschwindigkeit des Mähdreschers 2 fest, berechnet auf dieser Grundlage eine neue Route für den Mähdrescher 2 sowie für das Transportfahrzeug 16 (S13) und überträgt diese an den Mähdrescher 2 und das Transportfahrzeug 16 (S14). Da die neue Route an die tatsächliche Bestandsdichte angepasst ist, braucht der Fahrer die Geschwindigkeit nicht mehr zu korrigieren, und der Mähdrescher kann seinem Weg gemäß der neuen Route folgen, ohne dass es alsbald zu einer erneuten signifikanten Abweichung zwischen Ist- und Sollposition kommt.

Hätte der Fahrer die Geschwindigkeit des Mähdreschers in Schritt S3 nicht korrigiert, dann wäre es absehbar nach einer gewissen Zeit zu einem Stopfer gekommen, und der Fahrer hätte den Mähdrescher anhalten müssen, um den Stopfer zu beseitigen. Spätestens dann wäre es jedoch auch zu einer signifikanten Abweichung zwischen Ist- und Sollposition gekommen, der Fahrer wäre um eine erläuternde Sprachmeldung gebeten worden (S5), und es wäre eine neue, an die Bestandsdichte angepasste Route berechnet worden (S13) .

Ein von der Routenplanung nicht vorgesehener Halt des Mähdreschers kann auch andere Gründe haben, die über die Sprachmeldung erfasst und vom Computer 12 berücksichtigt werden können. Enthält die Sprachmeldung z.B. einen Hinweis auf eine Mittagspause des Fahrers, dann ist dadurch für den Computer 12 ersichtlich, dass keine weitgehenden Änderungen an den Routen anderer Fahrzeuge erforderlich sind, da Zeit für eine Mittagspause in der ursprünglichen Route ohnehin eingeplant ist und lediglich der vom Fahrer dafür gewählte Zeitpunkt bzw. Ort sich von dem der Route etwas unterscheidet, und der Fahrer die Arbeit nach der Mittagspause wieder aufnehmen wird. Enthält die Sprachmeldung hingegen einen Hinweis auf eine technische Störung, dann kann von einer Wiederaufnahme der Arbeit nach vorhersehbarer Zeit nicht ausgegangen werden; in diesem Fall kann der Computer 12, wenn verfügbar und wirtschaftlich sinnvoll, einen Ersatz-Mähdrescher oder einen Servicetechniker zur Behebung der Störung losschicken.

Eine Sprachmeldung des Fahrers könnte sich z.B. auch auf Ressourcen des Mähdreschers (wie etwa knappen Treibstoff, erschöpftes Fassungsvermögen des Korntanks) beziehen; in einem solchen Fall ermöglicht die semantische Analyse S12 eine vollautomatische Entscheidung über zu treffende Abhilfemaßnahmen wie etwa das Herbeirufen eines Tankfahrzeugs, eine Neuplanung der Route des Transportfahrzeugs 16 etc.

Eine unvorhergesehene Abweichung von der geplanten Fahrtrichtung kann ebenfalls als signifikante Abweichung von der geplanten Route eine Anforderung der Sprachmeldung S5 auslösen. Der in der Sprachmeldung genannte und in der semantischen Analyse S12 erkannte Grund kann z.B. ein unvorhergesehener Fremdkörper, der umfahren werden muss, eine stark verunkrautete Stelle, die gemieden werden soll, um das Erntegut nicht zu verunreinigen, oder dergleichen sein. Die darüber an den Computer 12 übertragene Information ermöglicht die Planung und Veranlassung geeigneter Abhilfemaßnahmen.

Auch wenn keine Aufforderung S5 zur Abgabe einer Sprachmeldung ergangen ist, kann der Fahrer jederzeit aus eigenem Antrieb eine Sprachmeldung abgeben. In Ermangelung einer signifikanten Abweichung gibt es keinen Ort der Abweichung, der der Sprachmeldung zugeordnet werden könnte; deswegen ist der Ort, der zusammen mit einer nicht angeforderten Sprachmeldung an den Computer übertragen wird, der Ort, an dem die Sprachmeldung abgegeben wurde. So kann das Datenverarbeitungssystem dazu genutzt werden, ortsbezogene Informationen beliebiger Art über die Feldfläche 17 zu sammeln, die zu einem späteren Zeitpunkt bei der Planung einer Route über die Feldfläche 17 genutzt werden können.

Die Verarbeitung einer solchen spontanen Sprachmeldung kann vom Schritt S7 an dieselben Schritte beinhalten wie in Fig. 3 gezeigt; insbesondere kann auch eine spontane Sprachmeldung zu einer Neuberechnung der Route führen, z.B. dann, wenn der Fahrer bei Erreichen der Feldfläche 17 oder während ihrer Bearbeitung feststellt, dass die geplante Bearbeitung z.B. wegen Nässe, unzureichender Reife des Ernteguts etc. nicht sinnvoll ist, und darauf in seiner Sprachmeldung hinweist.

### Bezugszeichen

- 1: Datenverarbeitungssystem
- 2: Fahrzeug
- 3: Satellitennavigationssystem
- 4: Mikrofon
- 5: Lautsprecher
- 6: Display
- 7: Bordcomputer
- 8: Speicher
- 9: Spracherkennungsprogramm
- 10: Programm
- 11: Funkschnittstelle
- 12: Computer
- 13: Leitstelle
- 14: Semantikanalyseprogramm
- 15: Routenplanerprogramm
- 16: Fahrzeug
- 17: Feldfläche
- 18: Route
- 19: Fahrzeug
- 20: Pflanzenbestand

## Patentansprüche

1. Fahrzeug (2), insbesondere landwirtschaftliches Fahrzeug, mit
- ersten Mitteln (3) zum Ermitteln eines Istwerts wenigstens eines Betriebsparameters des Fahrzeugs (2),
- zweiten Mitteln (4, 7) zum Aufzeichnen von Sprachmeldungen eines Fahrers, **gekennzeichnet durch**
- dritte Mittel (3) zum Ermitteln der aktuellen Zeit,
- vierte Mittel (7, 10) zum Abgleichen (S4) des Istwerts des wenigstens einen Betriebsparameters mit einem für die von den dritten Mitteln (3) bestimmte aktuelle Zeit vorgesehenen Sollwert und zum Auffordern (S5) des Fahrers zur Abgabe einer Sprachmeldung im Falle einer signifikanten Abweichung zwischen Ist- und Sollwert.

2. Fahrzeug nach Anspruch 1, **dadurch gekennzeichnet, dass** der wenigstens eine Betriebsparameter ausgewählt ist unter einer Position des Fahrzeugs, einer Fahrgeschwindigkeit des Fahrzeugs, einem zweiwertigen Betriebszustand eines Arbeitswerkzeugs des Fahrzeugs und einem für die Leistung des Arbeitswerkzeugs repräsentativen Betriebsparameter.

3. Fahrzeug (2), insbesondere landwirtschaftliches Fahrzeug, mit
- ersten Mitteln (3) zum Ermitteln eines Istwerts wenigstens eines von der Position verschiedenen Betriebsparameters des Fahrzeugs (2),
- zweiten Mitteln (4, 7) zum Aufzeichnen von Sprachmeldungen eines Fahrers, **gekennzeichnet durch**
- dritte Mittel (3) zum Ermitteln der aktuellen Position,
- vierte Mittel (7, 10) zum Abgleichen (S4) des Istwerts des wenigstens einen Betriebsparameters mit einem für die von den dritten Mitteln (3) bestimmte aktuelle Position vorgesehenen Sollwert und zum Auffordern (S5) des Fahrers zur Abgabe einer Sprachmeldung im Falle einer signifikanten Abweichung zwischen Ist- und Sollwert.

4. Fahrzeug nach Anspruch 3, **dadurch gekennzeichnet, dass** der wenigstens eine Betriebsparameter ausgewählt ist unter einer Fahrgeschwindigkeit des Fahrzeugs, einem zweiwertigen Betriebszustand eines Arbeitswerkzeugs des Fahrzeugs und einem für die Leistung des Arbeitswerkzeugs repräsentativen Betriebsparameter.

5. Fahrzeug nach einem der vorhergehenden Ansprüche, **dadurch gekennzeichnet, dass** die zweiten Mittel (4, 7) eingerichtet sind, eine Sprachmeldung verknüpft mit wenigstens einem Istwert der Position und/oder der Zeit aufzuzeichnen.

6. Fahrzeug nach einem der vorhergehenden Ansprüche, ferner mit einer Funkschnittstelle (11) zum Verbreiten des Inhalts der Sprachmeldung.

7. Datenverarbeitungssystem mit einem Fahrzeug (2) nach einem der vorhergehenden Ansprüche, **gekennzeichnet durch**
- fünfte Mittel (7, 9) zur Transkription einer aufgezeichneten Sprachmeldung.

8. Datenverarbeitungssystem nach Anspruch 7, **gekennzeichnet durch**
- sechste Mittel (12, 14) zur semantischen Analyse (S12) einer aufgezeichneten Sprachmeldung.

9. Datenverarbeitungssystem nach Anspruch 8, **dadurch gekennzeichnet, dass** die semantische Analyse (S12) ein Untersuchen der Sprachmeldung auf das Vorkommen wenigstens eines Schlüsselbegriffs umfasst.

10. Datenverarbeitungssystem nach Anspruch 8 oder 9, **gekennzeichnet durch**
- siebte Mittel (12, 15) zum Aktualisieren von Sollwerten basierend auf der aufgezeichneten Sprachmeldung.

11. Datenverarbeitungssystem nach Anspruch 10, **dadurch gekennzeichnet, dass** die siebten Mittel (12, 15) einen Routenplaner (15) umfassen und dass die aktualisierten Sollwerte eine von dem Routenplaner (15) neu geplante Route des Fahrzeugs (2) oder eines zweiten Fahrzeugs (16) beschreiben.

12. Datenverarbeitungssystem nach Anspruch 11, **dadurch gekennzeichnet, dass** der Routenplaner (15) eingerichtet ist, eine Route (18) des Fahrzeugs (2) basierend auf einer Annahme betreffend eine Eigenschaft der auf der Route (18) befahrenen Fläche (17) zu planen, während des Fahrens der Route (18) den Istwert der Eigenschaft zu erfassen und dem Neuplanen (S13) der Route (18) im Falle einer signifikanten Abweichung den Istwert der Eigenschaft zugrunde zu legen.

13. Verfahren zum Betreiben eines Fahrzeugs (2) mit den Schritten
- Festlegen eines Sollwerts eines Betriebsparameters des Fahrzeugs als Funktion der Zeit oder der Position des Fahrzeugs; dann
- Fahren (S1, S2) des Fahrzeugs (2) und, während des Fahrens, Ermitteln wenigstens eines Istwerts des Betriebsparameters;
- Abgleichen (S4) des Istwerts mit einem für die aktuelle Zeit oder Position vorgesehenen Sollwert und Auffordern (S5) des Fahrers zur Abgabe einer Sprachmeldung im Falle einer signifikanten Abweichung zwischen Ist- und Sollwert;
- Aufzeichnen (S7) einer Sprachmeldung eines Fahrers.

## Claims

1. A vehicle (2), in particular an agricultural vehicle, with
- first means (3) for determining an actual value of at least one operating parameter of the vehicle (2),
- second means (4, 7) for recording voice messages from a driver,
**characterized by**
- third means (3) for determining the current time,
- fourth means (7, 10) for comparing (S4) the actual value of the at least one operating parameter with a nominal value provided for the current time determined by the third means (3) and for prompting (S5) the driver to issue a voice message in the event of a significant discrepancy between the actual value and the nominal value.

2. The vehicle according to claim 1, **characterized in that** the at least one operating parameter is selected from a position of the vehicle, a driving speed of the vehicle, a binary operational state of a working implement of the vehicle and an operating parameter which is representative of the power of the working implement.

3. A vehicle (2), in particular an agricultural vehicle, with
- first means (3) for determining an actual value of at least one operating parameter of the vehicle (2) which is different from the position,
- second means (4, 7) for recording voice messages from a driver,
**characterized by**
- third means (3) for determining the current position,
- fourth means (7, 10) for comparing (S4) the actual value of the at least one operating parameter with a nominal value provided for the current position determined by the third means (3) and for prompting (S5) the driver to issue a voice message in the event of a significant discrepancy between the actual value and the nominal value.

4. The vehicle according to claim 3, **characterized in that** the at least one operating parameter is selected from a driving speed of the vehicle, a binary operational state of a working implement of the vehicle and an operating parameter which is representative of the power of the working implement.

5. The vehicle according to one of the preceding claims, **characterized in that** the second means (4, 7) are configured to record a voice message linked to at least one actual value for the position and/or for the time.

6. The vehicle according to one of the preceding claims, additionally with a radio interface (11) for disseminating the contents of the voice message.

7. A data processing system with a vehicle (2) according to one of the preceding claims, **characterized by**
- fifth means (7, 9) for the transcription of a recorded voice message.

8. The data processing system according to claim 7, **characterized by**
- sixth means (12, 14) for semantic analysis (S12) of a recorded voice message.

9. The data processing system according to claim 8, **characterized in that** the semantic analysis (S12) comprises an examination of the voice message as to the presence of at least one keyword.

10. The data processing system according to claim 8 or claim 9, **characterized by**
- seventh means (12, 15) for updating nominal values based on the recorded voice message.

11. The data processing system according to claim 10, **characterized in that** the seventh means (12, 15) comprise a route planner (15) and **in that** the updated nominal values describe a new route for the vehicle (2) or for a second vehicle planned by the route planner (15).

12. A data processing system according to claim 11, **characterized in that** the route planner (15) is configured to plan a route (18) for the vehicle (2) based on an assumption concerning a property of the area (17) traversed on the route (18), to acquire the actual value for the property while traversing the route (18) and to establish a new plan (S13) for the route (18) in the event of a significant discrepancy from the actual value of the property.

13. A method for operating a vehicle (2), with the steps of
- establishing a nominal value for an operating parameter of the vehicle as a function of the time or the position of the vehicle; then
- driving (S1, S2) the vehicle (2) and, while driving, determining at least one actual value for the operating parameter;
- comparing (S4) the actual value with a nominal value provided for the current time or position and prompting (S5) the driver to issue a voice message in the event of a significant discrepancy between the actual value and nominal value;
- recording (S7) a voice message from a driver.

## Revendications

1. Véhicule (2), en particulier véhicule agricole, comprenant,
- des premiers moyens (3) destinés à déterminer une valeur réelle d'au moins un paramètre de fonctionnement du véhicule (2),
- des deuxièmes moyens (4, 7) destinés à enregistrer des messages vocaux d'un conducteur,
**caractérisé en ce qu'**il comporte
- des troisièmes moyens (3) destinés à déterminer le temps actuel,
- des quatrièmes moyens (7, 10) destinés à comparer (S4) la valeur réelle du paramètre de fonctionnement, au nombre d'au moins un, avec une valeur de consigne prévue pour le temps actuel déterminé par les troisièmes moyens (3), et à inviter (S5) le conducteur à émettre un message vocal en cas d'écart significatif entre la valeur réelle et la valeur de consigne.

2. Véhicule selon la revendication 1, **caractérisé en ce que** le paramètre de fonctionnement, au nombre d'au moins un, est choisi parmi une position du véhicule, une vitesse de déplacement du véhicule, un état de fonctionnement bivalent d'un outil de travail du véhicule et un paramètre de fonctionnement qui est représentatif du rendement de l'outil de travail.

3. Véhicule (2) selon la revendication 1, en particulier véhicule agricole, comprenant
- des premiers moyens (3) destinés à déterminer une valeur réelle d'au moins un paramètre de fonctionnement du véhicule (2) qui est différent de la position,
- des deuxièmes moyens (4, 7) destinés à enregistrer des messages vocaux d'un conducteur,
**caractérisé en ce qu'**il comporte
- des troisièmes moyens (3) destinés à déterminer la position actuelle,
- des quatrièmes moyens (7, 10) destinés à comparer (S4) la valeur réelle du paramètre de fonctionnement, au nombre d'au moins un, avec une valeur de consigne prévue pour la position actuelle déterminée par les troisièmes moyens (3), et à inviter (S5) le conducteur à émettre un message vocal en cas d'écart significatif entre la valeur réelle et la valeur de consigne.

4. Véhicule selon la revendication 3, **caractérisé en ce que** le paramètre de fonctionnement, au nombre d'au moins un, est choisi parmi une vitesse de déplacement du véhicule, un état de fonctionnement bivalent d'un outil de travail du véhicule et un paramètre de fonctionnement qui est représentatif du rendement de l'outil de travail.

5. Véhicule selon l'une des revendications précédentes, **caractérisé en ce que** les deuxièmes moyens (4, 7) sont conçus pour enregistrer un message vocal, en combinaison avec au moins une valeur réelle de la position et/ou du temps.

6. Véhicule selon l'une des revendications précédentes, comprenant en outre une interface de radiocommunication (11) destinée à diffuser le contenu du message vocal.

7. Système de traitement de données comprenant un véhicule (2) selon l'une des revendications précédentes, **caractérisé en ce qu'**il comporte
- des cinquièmes moyens (7, 9) destinés à la transcription d'un message vocal enregistré.

8. Système de traitement de données selon la revendication 7, **caractérisé en ce qu'**il comporte
- des sixièmes moyens (12, 14) destinés à l'analyse sémantique (S12) d'un message vocal enregistré.

9. Système de traitement de données selon la revendication 8, **caractérisé en ce que** l'analyse sémantique (S12) comprend un examen du message vocal aux fins de détecter la présence d'au moins un terme clé.

10. Système de traitement de données selon la revendication 8 ou 9, **caractérisé en ce qu'**il comprend
- des septièmes moyens (12, 15) destinés à la mise à jour de valeurs de consigne, sur la base du message vocal enregistré.

11. Système de traitement de données selon la revendication 10, **caractérisé en ce que** les septièmes moyens (12, 15) comprennent un planificateur d'itinéraires (15), et **en ce que** les valeurs de consigne mises à jour décrivent un itinéraire nouvellement calculé par le planificateur d'itinéraires (15) pour le véhicule (2) ou un deuxième véhicule (16).

12. Système de traitement de données selon la revendication 11, **caractérisé en ce que** le planificateur d'itinéraires (15) est conçu pour planifier un itinéraire (18) du véhicule (2) sur la base d'une hypothèse concernant une propriété de la surface (17) empruntée au cours de l'itinéraire (18), pour recueillir la valeur réelle de la propriété pendant l'exécution de l'itinéraire et, en cas d'écart significatif, pour réaliser la nouvelle planification (S13) de l'itinéraire (18) sur la base de la valeur réelle de la propriété.

13. Procédé destiné à faire fonctionner un véhicule (2), comprenant les étapes suivantes :
- fixation d'une valeur de consigne d'un paramètre de fonctionnement du véhicule, en tant que fonction du temps ou de la position du véhicule ; puis
- déplacement (S1, S2) du véhicule (2) et, pendant le déplacement, détermination d'au moins une valeur réelle du paramètre de fonctionnement ;
- comparaison (S4) de la valeur réelle avec une valeur de consigne prévue pour le temps actuel ou la position actuelle, et invitation (S5) du conducteur à émettre un message vocal en cas d'écart significatif entre la valeur réelle et la valeur de consigne ;
- enregistrement (S7) d'un message vocal d'un conducteur.
